# EUROPÄISCHE PATENTANMELDUNG

(11) **EP 1 764 526 A2**
(43) Veröffentlichungstag der Anmeldung: **21.03.2007**
(21) Anmeldenummer: 06018427.2
(22) Anmeldetag: 04.09.2006
(51) Int. Cl.: F16D 48/06

(54) **Vorrichtung zur Steuerung eines Anfahrvorganges**

(30) Priorität: 16.09.2005 DE 102005044226
(71) Anmelder: ZF FRIEDRICHSHAFEN AG, 88046 Friedrichshafen (DE)
(72) Erfinder: Romanowski, Ralf, 97453 Schonungen (DE); Kuhn, Thomas, 97688 Bad Kissingen (DE); John, Thomas, 97529 Alitzheim (DE)

(57) **Zusammenfassung**

Vorrichtung zur Steuerung eines Anfahrvorganges eines Kraftfahrzeuges mittels eines zwischen einem Motor und einem Getriebe angeordneten Kupplungssystems, die eine Steuereinrichtung umfaßt, der zumindestens Sensorsignale zur Detektion der Fahrgeschwindigkeit, der Motorwellendrehzahl, mindestens einer Getriebeeingangswellendrehzahl und einer Fahrpedalstellung zuleitbar sind, wobei das Kupplungssystems in Abhängigkeit von Signalen eines Beschleunigungssensors angesteuert wird.

## Beschreibung

Es ist bereits ein Verfahren und eine Vorrichtung zur Steuerung eines Anfahrvorganges eines Kraftfahrzeugs, z. B. aus der DE 196 53 855 C1, bekannt. Bei diesem Verfahren wird die Motordrehzahl zu Beginn des Anfahrvorganges bei noch geöffneter Reibungskupplung bzw. Fahrzeugstillstand über einen vorgegebenen Motordrehzahlschwellwert erhöht. Durch die gezielte Erzeugung eines Schlupfens der Antriebsräder des Fahrzeugs fährt dieses mit maximaler Beschleunigung an. Zur Erzeugung des gewünschten Schlupfens der Antriebsräder steuert die Steuereinichtung hierbei die automatisierte Reibungskupplung derart an, daß durch das in Eingriffbringen der Reibungskupplung ein so großes Moment auf die Antriebsräder übertragen wird, daß gezielt ein Schlupfen derselben bewirkt wird. Die Schlupfdrehzahl wird hierbei über die Differenz der Fahrzeuggeschwindigkeit und der Geschwindigkeit der Antriebsräder bzw. durch eine Drehzahldifferenz von Antriebsrädern zu den nicht angetriebenen Rädern detektiert. Ist dieser Schlupfzustand hergestellt, so wird im folgenden der Schlupf der Antriebsräder in Abhängigkeit von der Fahrzeuggeschwindigkeit gezielt eingestellt. Durch dieses Vorsehen des Schlupfens der Antriebsräder ist ein Anfahren mit einer besonders hohen Fahrzeugbeschleunigung erreichbar. Nachteilig hierbei ist, dass das vorgestellte Verfahren nur bei Fahrzeugen, bei welchen nicht alle Räder angetrieben sind, angewendet werden kann, da eine Schlupfdrehzahl der Antriebsräder direkt über die Drehzahldifferenz der Antriebsräder zu den nicht angetriebenen Rädern bestimmt wird, oder aber aus der tatsächlichen Fahrzeuggeschwindigkeit, welche ebenfals aus der Drehzahl der nicht angetriebenen Räder bestimmt wird. Bei Allradfahrzeugen kann auf diese Weise eine gezielte Schlupfdrehzahlregelung der Antriebsräder nicht erfolgen, da eine Drehzahl von nicht angetriebenen Rädern als Referenzwert nicht zur Verfügung steht.

Weiterhin sind Verfahren zur Ermittlung der Fahrzeugreferenzgeschwindigkeit für Allradfahrzeuge mit einer Motorschleppmomentenregelung bekannt (z.Bsp. DE 10 2004 040 757 A1). Hierbei wird das Signal eines Längsbeschleunigungssensors mit den Radbeschleunigungen verglichen und die Mittenkupplung geöffnet wenn die Fahrzeugräder stärker verzögern als das Fahrzeug. Anschliesend kann die Fahrzeuggeschwindigkeit über die Raddrehzahl der nunmehr nicht mehr schlupfenden Räder bestimmt werden. Nachteilig hierbei ist, dass mit zur Bestimmung der Referenzgeschwindigkeit die Mittenkupplung geöffnet wird, damit die Räder der zweiten Antriebsachse nicht mehr schlupfen. Eine Bestimmung der Fahrzeugreferenzgeschwindigkeit bei allen schlupfenden Antriebsrädern kann somit nicht erfolgen.

Aufgabe der Erfindung ist es eine Vorrichtung zur Steuerung eines Anfahrvorganges eines Allradfahrzeuges zu schaffen, die es ermöglicht, das Fahrzeug mit der maximal möglichen Fahrzeugbeschleunigung anzutreiben.

Zur Lösung dieser Aufgabe ist vorgesehen, dass der Steuereinrichtung Signale eines Beschleunigungssensors zuleitbar sind und dass die Steuereinrichtung mindestens eine Kupplungsanordnung des Kupplungssystems in Abhängigkeit von Signalen des Beschleunigungssensors ansteuert. Der Beschleunigungssensor liefert hierbei Beschleunigungswerte des Fahrzeugs über Grund. Vorteilhaft hierbei ist, dass über eine Ansteuerung der Kupplungsanordnung das Drehmoment aller angetriebenen Räder beeinflusst werden kann.

In einer bevorzugten Ausführung der Vorrichtung ist vorgesehen, dass der Anfahrvorgang einen Rennstart mit schlupfenden Antriebsrädern umfasst. Vorzugsweise ist das Fahrzeug als Allradfahrzeug mit zwei antreibbaren Achsen ausgeführt. Höchstvorzugsweise können hierbei die beiden Achsen über eine ansteuerbare Mittenkupplung miteinander gekoppelt werden, welche über die Steuereinrichtung angesteuert werden kann. Der Anfahrvorgang wird hierbei bei geschlossener Mittenkupplung mit vier schlupfenden Antriebsrädern durchgeführt.

Nach einem weiteren wesentlichen Aspekt der Erfindung ist vorgesehen, dass die Steuereinrichtung die Drehmomentübertragungsfähigkeit der mindestens einen Kupplungsanordnung in Abhängigkeit von Signalen des Beschleunigungssensors und mindestens eines weiteren Sensors ansteuert. Vorzugsweise liefert der weitere Sensor hierbei eine der folgenden Informationen: Eine oder mehrere Raddrehzahlen, eine Getriebeausgangsdrehzahl, eine Getriebeeingangsdrehzahl, den eingelegten Gang. Über diese Informationen kann erfindungsgemäß eine Referenzgeschwindigkeit des Fahrzeugs ohne Schlupf der Antriebsräder bestimmt werden. Bei Vorliegen lediglich eines Wertes der Getriebeeingangswelle ist hierzu noch die Kenntnis des eingelegten Ganges notwendig, um auf die Referenzgeschwindigkeit zu schließen.

Nach einem weiteren wesentlichen Merkmal der Erfindung ist vorgesehen, dass die Steuereinrichtung das zeitliche Integral über die Beschleunigungswerte bestimmt. Das Integral über die vom Beschleunigungssensor ermittelten Beschleunigungswerte liefert einen Geschwindigkeitswert, welcher bei Kenntnis der aktuellen Geschwindigkeit des Fahrzeugs zu Messbeginn zur Bestimmung der absoluten Geschwindigkeit des Fahrzeugs über Grund herangezogen werden kann.

Voraussetzung hierfür ist lediglich ein Beschleunigungssensor hinreichender Güte, welcher hinreichend genaue und aktuelle Beschleunigungswerte liefert.

Eine vorteilhafte Weiterbildung der Vorrichtung sieht vor, dass der Wert des Beschleunigungssensors bei stehendem Fahrzeug gemessen wird und als Offset bei der Geschwindigkeitsberechnung während des Anfahrvorganges vom gemessenen Beschleunigungswert abgezogen wird. Vorteilhaft hierbei ist, dass auch bei nicht exakter Einbaulage des Beschleunigungssensors im Fahrzeug oder beim Durchführen des Anfahrvorganges auf nicht ebenen Geländes eine exakte Geschwindigkeitsbestimmung des Fahrzeugs während des Anfahrvorganges bei schlupfenden Antriebsrädern erfolgen kann. Zur Geschwindigkeitsbestimmung des Fahrzeuges mittels des gemessenen Beschleunigungswertes ist wie schon erwähnt die Kenntnis der aktuellen Fahrzeuggeschwindigkeit zu Beginn des Anfahrvorganges notwendig. Diese wird hierzu bei stehendem Fahrzeug und betätigter Bremse zu Null bestimmt, wodurch die zu ermittelnde Fahrzeuggeschwindigkeit lediglich aus dem Integral der Beschleunigung bestimmt wird. Für eine Geschwindigkeitsbestimmung mittels der Beschleunigungswerte des Fahrzeugs bei rollendem oder fahrendem Fahrzeug kann ein Drehzahlwert von nicht angetriebenen Rädern genutzt werden, um die Fahrzeuggeschwindigkeit zu Beginn der Messung zu ermitteln. Hierzu wird erfindungsgemäß die Mittenkupplung bei allradgetriebenen Fahrzeugen geöffnet um einen möglichen Radschlupf zu beenden und eine exakte Fahrzeuggeschwindigkeit zu ermitteln. Die Fahrzeuggeschwindigkeit bei schlupfenden Antriebsrädern wird aus der Summe der Geschwindigkeit zu Beginn und dem Integral der Beschleunigung ermittelt.

Erfindungsgemäß kann die ermittelte Fahrzeuggeschwindigkeit mit der Referenzgeschwindigkeit verglichen und aus der Differenz der beiden Werte der Radschlupf der angetriebenen Raäder ermittelt werden. Alternativ kann aus der absoluten Fahrzeuggeschwindigkeit ein Referenzdrehzahlwert der Antriebsräder ermittelt werden und dieser mit den tatsächlichen Raddrehzahlen verglichen werden.

Die Steuereinrichtung steuert in Abhängigkeit der ermittelten Schlupfdrehzahl der Antriebsräder die Kupplungsanordnung des Kupplungssystems an. Erfindungsgemäß wird hierbei zum Einregeln eines bestimmten Radschlupfes während des Anfahrvorganges die Kupplungseinrichtung bei Überschreiten eines Schwellwertes des aktuellen Radschlupfes die Kupplungsanordnung in Richtung Öffnen und bei Unterschreiten eines Schwellwertes die Kupplungsanordnung in Richtung Schließen angesteuert. Alternativ oder zusätzlich kann in Abhängigkeit des aktuellen Radschlupfes die Mittenkupplung von der Steuereinrichtung angesteuert werden.

Bei dem Getriebe des Fahrzeuges kann es sich um ein automatisiertes Getriebe im Antriebsstrang eines Kraftfahrzeuges handeln, welches eine Eingangswelle und eine ihr zugeordnete Kupplung aufweist. Weiterhin kann es sich auch um ein Doppelkupplungstreiebe handeln, welches zwei Getriebeeingangeswellen aufweist, welche jeweils einer vorzugsweise nasslaufenden Kupplungsanordnung zugeordnet sind und wobei das Getriebe eine Getriebeausgangswelle aufweist. Den beiden Getriebesträngen sind hierbei jeweils verschiedene Gangstufen des Getriebes zugeordnet, welche unabhängig voneinander ein- und ausgelegt werden können. Eine weiterführende Ausgestaltung der erfindungsgemäßen Lehre sieht hierbei vor, dass bei Anordnung eines Doppelkupplungsgetriebes im Antriebstrang und jeweils einem eingelegtem Anfahrgang in beiden Teilgetrieben, eine oder beide Kupplungen von der Steuereinrichtung in Abhängigkeit von Signalen eines Beschleunigungssensors ansteuerbar sind. Hierbei kann zum Beispiel vorgesehen sein, dass der Anfahrvorgang mittels der einen Kupplung eingeleitet wird zum Erzeugen eines Radschlupfes und bei Überschreiten einer Schlupfdrehzahl die andere Kupplung in Richtung Schließen angesteuert wird. Erfindungsgemäß ist hierbei der einen Kupplung ein niedrigerer und der anderen Kupplung ein höherer Anfahrgang zugeordnet. Vorteilhaft hierbei wirkt sich bei Verwendung von zwei nasslaufenden Kupplungsanordnung die Verteilung der Wärmeabfuhr auf beide Kupplungen aus.

Weitere Einzelheiten des erfindungsgemäßen Anfahrvorganges sind aus der DE 196 53 855 C1 bekannt, welche vollinhaltlich in den Offenbarungsgehalt dieser Anmeldung mit aufgenommen wird.

## Patentansprüche

1. Vorrichtung zur Steuerung eines Anfahrvorganges eines Kraftfahrzeuges mittels eines zwischen einem Motor und einem Getriebe angeordneten Kupplungssystems, die eine Steuereinrichtung umfaßt, der zumindestens Sensorsignale zur Detektion der Fahrgeschwindigkeit, der Motorwellendrehzahl, mindestens einer Getriebeeingangswellendrehzahl und einer Fahrpedalstellung zuleitbar sind,
**dadurch gekennzeichnet,**
**dass** der Steuereinrichtung Signale eines Beschleunigungssensors zuleitbar sind und dass die Steuereinrichtung mindestens eine Kupplungsanordnung des Kupplungssystems in Abhängigkeit von Signalen des Beschleunigungssensors ansteuert.

2. Vorrichtung zur Steuerung eines Anfahrvorganges nach Anspruch 1,
**dadurch gekennzeichnet,**
**dass** der Anfahrvorgang einen Rennstart mit schlupfenden Antriebsrädern umfasst.

3. Vorrichtung zur Steuerung eines Anfahrvorganges nach Anspruch 1,
**dadurch gekennzeichnet,**
**dass** das Fahrzeug ein Allradfahrzeug mit zwei angetriebenen Achsen ist.

4. Vorrichtung zur Steuerung eines Anfahrvorganges nach Anspruch 1,
**dadurch gekennzeichnet,**
**dass** die Steuereinrichtung die Drehmomentübertragungsfähigkeit der mindestens einen Kupplungsanordnung in Abhängigkeit von Signalen des Beschleunigungssensors und mindestens eines weiteren Sensors ansteuert.

5. Vorrichtung zur Steuerung eines Anfahrvorganges nach Anspruch 1,
**dadurch gekennzeichnet,**
**dass** die Steuereinrichtung das zeitliche Integral über Beschleunigungswerte ermittelt.
